# EUROPÄISCHE PATENTSCHRIFT

(11) **EP 3 551 507 B1**
(45) Veröffentlichungstag und Bekanntmachung des Hinweises auf die Patenterteilung: **13.09.2023**
(21) Anmeldenummer: 17807817.6
(22) Anmeldetag: 27.11.2017
(51) Int. Cl.: B60R 25/20, B60R 25/24, B60J 3/04

(54) **ANORDNUNG ZUM BETREIBEN EINER ODER MEHRERER AM FAHRZEUG ANGEBRACHTER SCHEIBEN**
ARRANGEMENT FOR OPERATING ONE OR MORE WINDOWS INSTALLED IN A VEHICLE
DISPOSITIF POUR FAIRE FONCTIONNER UNE OU PLUSIEURS VITRES INSTALLÉES SUR UN VÉHICULE

(30) Priorität: 12.12.2016 DE 102016224750
(43) Veröffentlichungstag der Anmeldung: 16.10.2019
(73) Patentinhaber: Continental Automotive Technologies GmbH, 30165 Hannover (DE)
(72) Erfinder: HEBLING, Annette, 93102 Geisling (DE); HEINRICH, Alexander, 93093 Donaustauf (DE)
(74) Vertreter: Continental Corporation
(86) Internationale Anmeldenummer: PCT/EP2017/080482
(87) Internationale Veröffentlichungsnummer: WO 2018/108501

(56) Entgegenhaltungen:
- WO-A1-2008/000795
- DE-A1-102007 023 261
- DE-A1-102011 083 772
- DE-A1-102011 111 600
- US-A1- 2007 200 668
- US-A1- 2015 057 896

## Beschreibung

Die vorliegende Erfindung betrifft eine Anordnung zum Betreiben einer oder mehrerer am Fahrzeug angebrachter, insbesondere eine Fahrgastzelle begrenzenden Scheiben. Ferner betrifft die Erfindung ein Fahrzeug mit einer entsprechend genannten Anordnung.

Um einen unbefugten Zutritt zu einem Fahrzeug, insbesondere Kraftfahrzeug zu verhindern, verwenden moderne Zugangsberechtigungssysteme oder Zugangsvorrichtungen in Fahrzeugen elektronische Sicherungssysteme, bei denen zur Authentifizierung des Benutzers eine Datenkommunikation zwischen einer ersten Kommunikationseinrichtung des Fahrzeugs mit einer zweiten Kommunikationseinrichtung in einem mobilen Identifikationsgeber des Benutzers, wie einem Schlüssel oder Schlüsselanhänger, erfolgt, wie z.B. aus der DE102007023261 A1 bekannt ist. Dabei werden bei einer aktiven Zugangsvorrichtung von dem mobilen Identifikationsgeber Steuersignale sowie ein Identifikationscode, beispielsweise durch Drücken einer entsprechenden Taste durch den Benutzer des mobilen Identifikationsgebers an das Fahrzeug gesendet, woraufhin dieses bei korrektem Identifikationscode entriegelt bzw. verriegelt wird.

Bei einer sog. passiven Zugangsvorrichtung werden zunächst von einer ersten Kommunikationseinrichtung des Fahrzeugs in vorbestimmten regelmäßigen Zeitabständen Funksignale zunächst als Anfragesignale oder Lokalisierungssignale mit einer bestimmten Feldstärke ausgesendet, um zu überprüfen, ob sich ein mobiler Identifikationsgeber in einem Annäherungsbereich um das Fahrzeug befindet. Nähert sich ein mobiler Identifikationsgeber dem Fahrzeug und kann schließlich dessen Anfragesignale empfangen, weil er in den Annährungsbereich eingetreten ist, so wird er auf den Empfang eines Anfragesignals antworten, um einen Authentifizierungsvorgang einzuleiten, und um die Position des mobilen Identifikationsgebers bezüglich des Fahrzeugs bestimmen zu können. Zur Authentifizierung werden Datentelegramme ausgetauscht, in denen letztlich der mobile Identifikationsgeber seinen Identifikationscode dem Fahrzeug übermittelt. Bei erfolgreicher Überprüfung des Identifikationscodes ist es dann möglich, dass ein Benutzer, der sich direkt am Fahrzeug befindet, durch Betätigen eines Türgriffs ein Entriegeln der entsprechenden Fahrzeugtür oder aller Fahrzeugtüren initiiert. Da hier kein aktives Betätigen eines mechanischen oder elektrischen Identifikationsgebers bzw. Schlüssels durch einen Benutzer vorgenommen werden muss, wird diese Art der Zugangsberechtigung auch als passive Zugangsberechtigungsprüfung, und die entsprechenden Zugangsvorrichtungen als passive elektronische Zugangsvorrichtungen bezeichnet.

Insbesondere bei einer gerade beschriebenen passiven Zugangsvorrichtung kann es nachteilig sein, dass eine Benutzer bzw. Fahrer nicht immer weiß, ob ein ihm zugeordnetes Fahrzeug ihn bei Eintreten in den Annährungsbereich erkannt hat, und ob das Funksignal mit dem Identifikationscode beim Fahrzeug korrekt angekommen ist.

Somit besteht die Aufgabe der vorliegenden Erfindung, eine Möglichkeit zu schaffen, das Vorhandensein eines Objekts in der Nähe eines Fahrzeugs bzw. eine Annäherung anzuzeigen.

Gemäß einem ersten Aspekt der Erfindung wird deshalb eine Anordnung zum Betreiben einer oder mehrerer am Fahrzeug angebrachter, insbesondere eine Fahrgastzelle begrenzenden Scheiben, deren optische Eigenschaften durch elektrische Ansteuerung veränderbar sind, geschaffen. Insbesondere handelt es sich bei den Scheiben um transparente Scheiben, die durch elektrische Ansteuerung ihre Lichtdurchlässigkeit als optische Eigenschaft verändern können. Vorteilhafterweise sind die eine oder mehreren transparenten Scheiben derart ausgelegt, dass sie ihre Lichtdurchlässigkeit durch das Anlegen einer elektrischen Spannung verändern. Es ist auch denkbar, dass als optische Eigenschaft einer Scheibe die Farbe durch elektrische Ansteuerung bzw. das Anlegen einer Spannung an die Scheibe veränderbar ist. Zu diesem Zweck der Veränderung der optischen Eigenschaft einer Scheibe weist diese beispielsweise ein elektrisch ansteuerbares optisch aktives Material auf. Die Anordnung hat ferner eine Positionsbestimmungseinrichtung zum Bestimmen der Position eines sich außerhalb des Fahrzeugs befindlichen Objekts, sowie ein Steuergerät, das dafür eingerichtet ist, die eine oder die mehreren Scheiben in Abhängigkeit der von der Bestimmungseinrichtung bestimmten Position anzusteuern. Auf diese Weise kann das Vorhandensein eines Objekts, wie eines Benutzers bzw. Fahrers, in der Nähe eines Fahrzeugs bzw. eine Annäherung angezeigt werden. Insbesondere kann das Steuergerät dafür eingerichtet sein, die eine oder die mehreren Scheiben in Abhängigkeit des Abstands zwischen dem Fahrzeug und dem Objekt anzusteuern, um vor allem eine oder mehrere optische Eigenschaften der einen oder mehreren Scheiben in Abhängigkeit des Abstands zu verändern. Auf diese Weise kann insbesondere eine Bewegung eines Objekts, wie eines Fahrers, zum Fahrzeug hin (Annäherung), aber auch eine Bewegung eines Objekts vom Fahrzeug (Weggehen) durch das Fahrzeug angezeigt werden.

Erfindungsgemäß ist das Steuergerät dafür eingerichtet, die eine oder die mehreren Scheiben derart anzusteuern, dass deren Lichtdurchlässigkeit mit abnehmendem Abstand erhöht wird. Entsprechend ist es auch denkbar, dass die Lichtdurchlässigkeit mit zunehmendem Abstand verringert wird.

Auf diese Weise wird beispielsweise einem sich dem Fahrzeug nähernden Fahrer (als das Objekt) signalisiert, dass seine Annährung vom Fahrzeug erkannt wird. Außerdem wird bei einer zunehmenden Lichtdurchlässigkeit der einen oder mehreren Scheiben bei abnehmendem Abstand das Fahrzeug gleich in einen fahrbereiten Zustand gebracht, in dem die Scheiben ja eine möglichst gute bzw. hohe Lichtdurchlässigkeit haben sollten, um ein sicheres Fahren zu ermöglichen.

Gemäß einer weiteren Ausgestaltung des Steuergeräts ist dieses dafür eingerichtet, die Ansteuerung der einen oder mehreren Scheiben ab bzw. unterhalb eines ersten vorbestimmten Abstands des Objekts vom Fahrzeug zu beginnen, insbesondere wieder derart, dass deren Lichtdurchlässigkeit mit abnehmendem Abstand erhöht wird.

Es ist auch denkbar, dass das Steuergerät derart eingerichtet ist, die Ansteuerung der einen oder mehreren Scheiben in einem Bereich zwischen einem ersten vorbestimmten Abstand und einem zweiten vorbestimmten Abstand zwischen dem Fahrzeug und dem Objekt durchzuführen, wobei der erste vorbestimmte Abstand größer als der zweite vorbestimmte Abstand ist. Insbesondere erfolgt die Ansteuerung durch das Steuergerät derart, dass deren Lichtdurchlässigkeit der einen oder mehreren Scheiben mit abnehmendem Abstand erhöht wird.

Es ist überdies denkbar, dass das Steuergerät derart eingerichtet ist, dass es bei einem bestimmten Abstand des Objekts zum Fahrzeug eine Ansteuerung bezüglich einer hohen Lichtdurchlässigkeit bzw. Transparenz durchführt, um die eine oder mehreren Scheiben in einen fahrbereiten Zustand zu versetzen. Es wird dabei davon ausgegangen, dass sich die eine oder mehreren Scheiben des Fahrzeugs in einem Ausgangszustand, wie in einem geparkten Zustand und/der einem verriegelten Zustand, befinden, bei dem sie einen Zustand mit geringer Lichtdurchlässigkeit (z.B. einen opaquen Zustand) aufweisen, in dem ein Blick in die Fahrgastzelle verhindert wird. Auch wenn die eine oder mehreren Scheiben auf die Ansteuerung durch das Steuergerät verzögert reagieren sollten (abhängig von einem ansteuerbaren optisch aktiven Material in der einen oder den mehreren Scheiben), und nicht unmittelbar bei Ansteuerung schon die gewünschte Lichtdurchlässigkeit herstellen, kann durch die Ansteuerung der einen oder mehreren Scheiben bereits vor Eintreffen des Objekts am Fahrzeug erreicht werden, dass die eine oder mehreren Scheiben dann schließlich bei Eintreffen des Objekts am Fahrzeug die gewünschte Lichtdurchlässigkeit haben. Wird beispielsweise ein Fahrer eines Fahrzeugs (als das Objekt) in einem Abstand von zehn Metern vom Fahrzeug entfernt erkannt, so kann das Steuergerät bereits bei diesem Abstand die eine oder die mehreren Scheiben ansteuern, insbesondere um sie in einen fahrbereiten Zustand mit hoher Lichtdurchlässigkeit, beispielsweise mit maximaler Lichtdurchlässigkeit zu bringen. Bewegt sich der Fahrer weiter auf das Fahrzeug zu und erreicht schließlich das Fahrzeug, so kann die eine oder die mehreren Scheiben (auch bei einer verzögerten Reaktion des optisch aktiven Materials in den Scheiben) bereits den gewünschten Zustand der Lichtdurchlässigkeit aufweisen, oder insbesondere dann, wenn der Fahrer im Fahrzeug sitzt, um mit diesem loszufahren.

In diesem Zusammenhang ist es auch denkbar, dass das Steuergerät die Ansteuerung nicht oder nicht ausschließlich bei einem bestimmten Abstand des Objekts zum Fahrzeug beginnt, sondern anhand einer erfassten Bewegung (ausgehend von einer bestimmten Position und Positionsänderung bzw. Geschwindigkeit) des Objekts den Zeitpunkt schätzt, bis das Objekt am Fahrzeug angekommen sein wird. Entsprechend kann das Steuergerät dann bei Berücksichtigung des notwendigen Zeitintervalls für eine durchzuführende Änderung der Lichtdurchlässigkeit der einen oder der mehreren Scheiben, die Ansteuerung der einen oder der mehreren Scheiben derart (frühzeitig) beginnen, dass die durchzuführende Änderung der Lichtdurchlässigkeit der einen oder der mehreren Scheiben abgeschlossen ist, bevor der abgeschätzte Zeitpunkt des Eintreffens des Objekts beim Fahrzeug erreicht ist.

Gemäß einer Ausgestaltung der Positionsbestimmungseinrichtung umfasst diese einen optischen Sensor, wie eine Kamera, zum Erfassen des sich außerhalb des Fahrzeugs befindlichen Objekts.

In diesem Zusammenhang kann die Anordnung eine Bildverarbeitungseinrichtung zur Identifizierung des Objekts (Gesichtserkennung) und/oder bestimmter Eigenschaften des Objekts (Bewegung oder Gang des Objekts) aufweisen. Dabei kann die Bildverarbeitungseinrichtung auch Teil des Steuergeräts sein. Insbesondere kann die Bildverarbeitungseinrichtung dafür ausgelegt sein, die Art des Objekts zu erkennen, beispielsweise ob es sich bei dem Objekt um einen Menschen bzw. Person handelt, die sich dem Fahrzeug nähert. Außerdem kann die Bildverarbeitungseinrichtung dafür ausgelegt sein, bestimmte Eigenschaften des Objekts zu erkennen, und kann in diesem Zusammenhang auch ein Gesicht eines Menschen oder bestimmte Bewegungen bzw. auch den Gang eines Menschen erkennen. Das Gesicht oder der Gang des Menschen können dabei auch als ein biometrischer Identifikationscode dienen.

Gemäß einer Ausgestaltung des Steuergeräts ist dieses derart eingerichtet, die eine oder die mehreren Scheiben nur dann anzusteuern (um optische Eigenschaften, wie die Lichtdurchlässigkeit zu verändern), wenn die Bildverarbeitungseinrichtung ein bestimmtes Objekt, wie einen Menschen und/oder bestimmte Eigenschaften des Objekts, wie ein bestimmtes Gesicht oder einen bestimmten Gang eines Menschen erkannt hat. Auf diese Weise wird verhindert, dass eine ungewolltes Ansteuern der einen oder der mehreren Scheiben geschieht, d.h. ungewollt bei Objekten, die nicht dem Fahrzeug zugeordnet sind. Auf diese Weise kann einerseits Strom im Fahrzeug gespart, und ferner das ansteuerbare optisch aktive Material in den Scheiben geschont werden.

Gemäß einer Ausgestaltung der Positionsbestimmungseinrichtung umfasst diese ein Funkmodul zum Empfangen von objektseitigen Funksignalen, die auf die Position des Objekts außerhalb des Fahrzeugs hinweisen. Dabei können die objektseitigen Funksignale Positionsdaten des Objekts enthalten, wie beispielsweise Ortsdaten, insbesondere Ortsdaten eines satellitengestützten Ortungssystems (wie GPS (global positioning system)- Daten). Es ist auch denkbar, dass es sich bei den Ortsdaten um gemessene Feldstärkewerte (RSSI (received signal strenght indicator)-Werte von Anfragesignalen handelt, die von einer oder mehreren fahrzeugseitigen Antennen zur Positionsbestimmung des Objekts ausgesendet worden sind.

Gemäß einer Ausgestaltung des Funkmoduls kann dieses ferner Anfragesignale zum Auslösen der objektseitigen Funksignale aussenden. Beispielsweise können als Anfragesignale Niederfrequente Funksignale (z.B. bei ca. 125 kHz) ausgesendet werden, deren Feldstärke am Ort des Objekts dann zur Positionsbestimmung bestimmt wird, während als objektseitigen Funksignale dann Hochfrequente objektseitige Funksignale (z.B. bei 433 MHz) zurück gesendet werden. Ferner ist es denkbar, zur Positionsbestimmung des Objekts eine Laufzeitmessung der Anfragesignale vom Fahrzeug zum Objekt und dann der objektseitigen Funksignale vom Objekt zum Fahrzeug durchzuführen.

Es ist dabei denkbar, dass die objektseitigen Funksignale einen Identifizierungscode umfassen. In diesem Zusammenhang kann das Steuergerät derart eingerichtet sein, die eine oder die mehreren Scheiben nur dann anzusteuern, wenn der durch die Funksignale empfangene Identifizierungscode einem vorbestimmten Code entspricht. Auf diese Weise wird wiederum verhindert, dass eine ungewolltes Ansteuern der einen oder der mehreren Scheiben geschieht, d.h. ungewollt bei Objekten, die nicht dem Fahrzeug zugeordnet sind. Dadurch kann einerseits Strom im Fahrzeug gespart, und ferner das ansteuerbare optisch aktive Material in den Scheiben geschont werden.

Gemäß einem weiteren Aspekt der Erfindung wird eine Zugangsvorrichtung für ein Fahrzeug geschaffen. Diese hat eine oben dargestellte Anordnung oder eine Ausgestaltung hiervon, sowie eine Verriegelungseinrichtung zum Steuern des Verriegelns und/oder Entriegelns einer oder mehrerer Türen eines Fahrzeugs als Reaktion auf das Empfangen eines korrekten Identifikationscode. Bei dem Identifikationscode kann es sich um einen mittels eines objektseitigen Funksignals übertragenen Code handeln, oder aber auch um einen biometrischen Identifikationscode.

Gemäß einem weiteren Aspekt der Erfindung wird ein Fahrzeug geschaffen, das eine Fahrgastzelle mit einer oder mehreren diese begrenzenden Scheiben aufweist, deren optische Eigenschaften durch elektrische Ansteuerung veränderbar sind. Ferner hat das Fahrzeug eine oben dargestellte Anordnung oder eine Ausgestaltung hiervon zum Betreiben der einen oder mehreren Scheiben.

Gemäß einem weiteren Aspekt der Erfindung wird ein Verfahren zum Betreiben einer oder mehrerer am Fahrzeug angebrachter, insbesondere eine Fahrgastzelle begrenzende Scheiben, deren optische Eigenschaften durch elektrische Ansteuerung veränderbar sind, geschaffen. Dabei weist das Verfahren folgende Schritte auf. Es wird eine Position eines sich außerhalb des Fahrzeugs befindlichen Objekts bestimmt. Ferner werden die eine oder die mehreren Scheiben in Abhängigkeit der von der Bestimmungseinrichtung bestimmten Position angesteuert.

Vorteilhafte Ausgestaltungen der Anordnungen sind, soweit auf das Fahrzeug und das Verfahren übertragbar, auch als vorteilhafte Ausgestaltungen des Fahrzeugs und des Verfahrens anzusehen, und umgekehrt.

Im Folgenden sollen nun beispielhafte Ausführungsformen der vorliegenden Erfindung Bezug nehmend auf die beiliegenden Zeichnungen näher erläutert werden. Es zeigen:
- Figur 1: eine schematische Darstellung eines Fahrzeugs mit einer Anordnung zum Betreiben einer oder mehrerer am Fahrzeug angebrachter Scheiben gemäß einer Ausführungsform der Erfindung;
- Figuren 2: ein Diagramm zum Veranschaulichen der Ansteuerung der einen oder mehreren Scheiben in Abhängigkeit der Position bzw. des Abstands zwischen dem Fahrzeug und einem Identifikationsgeber gemäß einer ersten Ausführungsform für die Ansteuerung;
- Figuren 3: ein Diagramm zum Veranschaulichen der Ansteuerung der einen oder mehreren Scheiben in Abhängigkeit der Position bzw. des Abstands zwischen dem Fahrzeug und einem Identifikationsgeber gemäß einer zweiten und dritten Ausführungsform für die Ansteuerung.

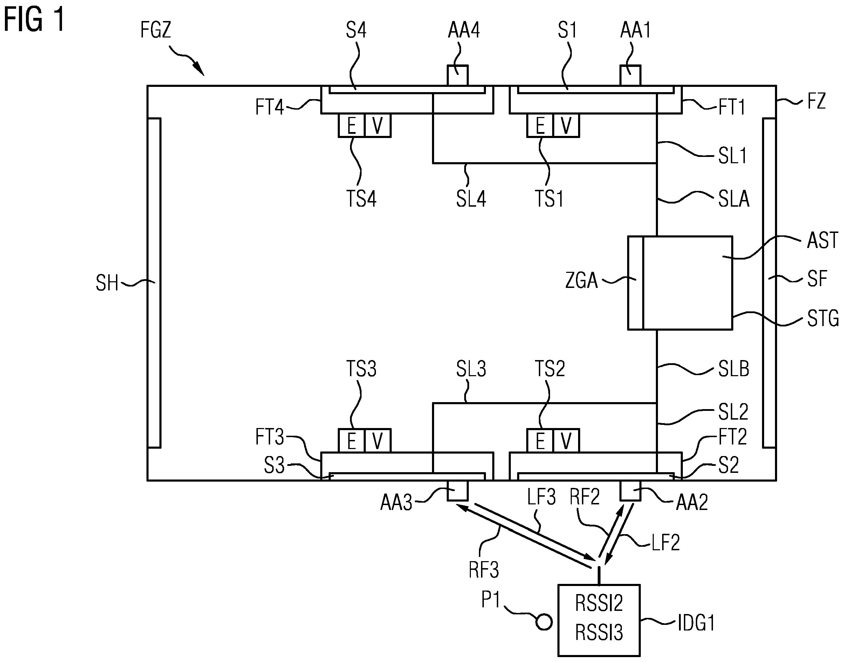

Es sei zunächst auf Figur 1 verwiesen, in der eine schematische Darstellung eines Fahrzeugs F2 mit den wesentlichen Komponenten einer Anordnung zum Betreiben einer oder mehrerer am Fahrzeug F2 angebrachter Scheiben gemäß einer Ausführungsform der Erfindung gezeigt ist. Das Fahrzeug F2 hat dabei eine Fahrgastzelle FG2, die von mehreren transparenten Scheiben S1, S2, S3, S4, SH und SF begrenzt sind. Am hinteren Ende des Fahrzeugs ist die Heckscheibe SH vorgesehen, während am vorderen Ende eine Frontscheibe SF vorgesehen ist. Die übrigen Scheiben S1, S2, S3 und S4 sind entsprechenden Fahrzeugtüren FT1, FT2, FT3 und FT4 jeweils zugeordnet. Entsprechend begrenzen auch die genannten Fahrzeugtüren FT1 - FT4 die Fahrgastzelle FG2. Die Fahrzeugtüren umfassen ferner jeweilige ihnen zugeordnete Türschlösser TS1, TS2, TS3 und TS4, die in einen entriegelten Zustand E und einen verriegelten Zustand V durch elektrische Ansteuerung gebracht werden können.

Das Besondere der Scheiben S1, S2, S3, S4, SH und SF besteht darin, dass es sich hierbei um transparente Scheiben handelt, die ein optisch aktives Material aufweisen, das durch elektrische Ansteuerung zwischen Zuständen mit unterschiedlichem Lichtdurchlassverhalten umschaltbar ist. Derartige schaltbare Scheiben oder Verglasungen werden auch als intelligentes Glas bezeichnet, bei dem die Lichtdurchlässigkeit durch das Anlegen einer elektrischen Spannung verändert werden kann. Die Ansteuerung erfolgt dabei über ein Steuergerät STG. Genauer gesagt umfasst das Steuergerät STG eine Ansteuereinrichtung AST, die über Steuerleitungen SLA, SL1, SL4 bzw. SLB, SL2 und SL3 die Scheiben S1, S4 bzw. S2 und S3 elektrisch ansteuern kann, um deren Lichtdurchlassverhalten zu verändern. Es ist hierbei denkbar, dass neben dem zentralen Steuergerät STG auch weitere dezentrale Steuereinheiten vorhanden sind (nicht dargestellt), die den einzelnen Scheiben S1 - S4 zugeordnet sind, um diese gemäß einer Anweisung vom zentralen Steuergerät STG elektrisch anzusteuern bzw. mit einer Spannung zu beaufschlagen (um quasi ein "Mas-ter-Slave"-Prinzip zwischen Steuergerät und den Steuereinheiten zu realisieren).

Neben der Anordnung zum Betreiben der einen oder mehreren Scheiben S1 bis S4 hat das Fahrzeug F2 ferner eine Zugangsvorrichtung, deren zentrale Steuerkomponente in Form eines Zugangsabschnitts ZGA ebenso in dem Steuergerät STG untergebracht ist. Dies Zugangsvorrichtung wird insbesondere in einem sogenannten passiven Modus betrieben wird, in dem zunächst von einer ersten Kommunikationseinrichtung (den Antennen AA2, AA3) des Fahrzeugs F2 in regelmäßigen Zeitabständen Anfragesignale LF2, LF3 (insbesondere in Form von niederfrequenten Funksignalen) mit einer bestimmten Feldstärke ausgesendet werden, um zu überprüfen, ob sich ein mobiler Identifikationsgeber IDG1 in einem Annäherungsbereich bzw. Erfassungsbereich um das Fahrzeug F2 befindet. Nähert sich ein mobiler Identifikationsgeber dem Fahrzeug, und kann schließlich dessen Anfragesignale empfangen, so wird er auf den Empfang eines Anfragesignals LF2 bzw. LF3 antworten, um einen Authentifizierungsvorgang einzuleiten. Dabei werden Datentelegramme ausgetauscht, in denen letztlich der mobile Identifikationsgeber IDG1 seinen spezifischen Code oder Identifikationscode dem Fahrzeug in einem hochfrequenten Signal RF2 bzw. RF3 übermittelt. Bei erfolgreicher Überprüfung des Authentifizierungscodes (übereinstimmenden Vergleich mit einem gespeicherten Code) ist es dann möglich, dass ein Benutzer, der sich direkt am Fahrzeug befindet, durch Betätigen eines Türgriffs ein Entriegeln der entsprechenden Fahrzeugtür oder aller Fahrzeugtüren initiiert. Da hier kein aktives Betätigen eines mechanischen oder elektrischen Identifikationsgebers durch einen Benutzer vorgenommen werden muss, wird diese Art der Zugangsberechtigung auch als passiver Modus und die entsprechenden Zugangseinrichtungen als passive elektronische Zugangseinrichtungen bezeichnet.

Bei diesen passiven Zugangseinrichtungen ist es ferner denkbar, dass nicht nur die Anwesenheit, sondern auch die Position des Identifikationsgebers IDG1 mit Bezug zum Fahrzeug ermittelt werden kann. Wie bereits erwähnt, werden die Anfragesignale LF2 und LF3 mit einer vorbestimmten Feldstärke von den Antennen AA2 und AA3 (natürlich auch durch die Antennen AA1 und AA4, wobei aus Gründen der einfachen Darstellung nur auf die Antennen AA2 und AA3 eingegangen wird) ausgesendet. Entsprechend wird am Ort P1 des Identifikationsgebers IDG1 die Empfangsfeldstärke dieser Anfragesignale gemessen und ein entsprechender Empfangsfeldstärkewert (RSSI = received signal strength indicator-Wert) RSSI2 für das Signal LF2 und RSSI3 für das Signal LF3 bestimmt. Diese Empfangsfeldstärkewerte lassen dann einen Rückschluss auf die Entfernung bzw. den Abstand des Identifikationsgebers IDG1 zu den jeweiligen Antennen AA2 und AA3 zu. Gemäß Figur 1 wird aufgrund der größeren Nähe des Identifikationsgebers IDG1 zur Antenne AA2 der entsprechende Empfangsfeldstärkewert RSSI2 größer als der Empfangsfeldstärkewert RSSI3 sein. Durch die entsprechende Korrelation der beiden Empfangsfeldstärkewerte kann somit auch die Position des Identifikationsgebers IDG1 bestimmt werden.

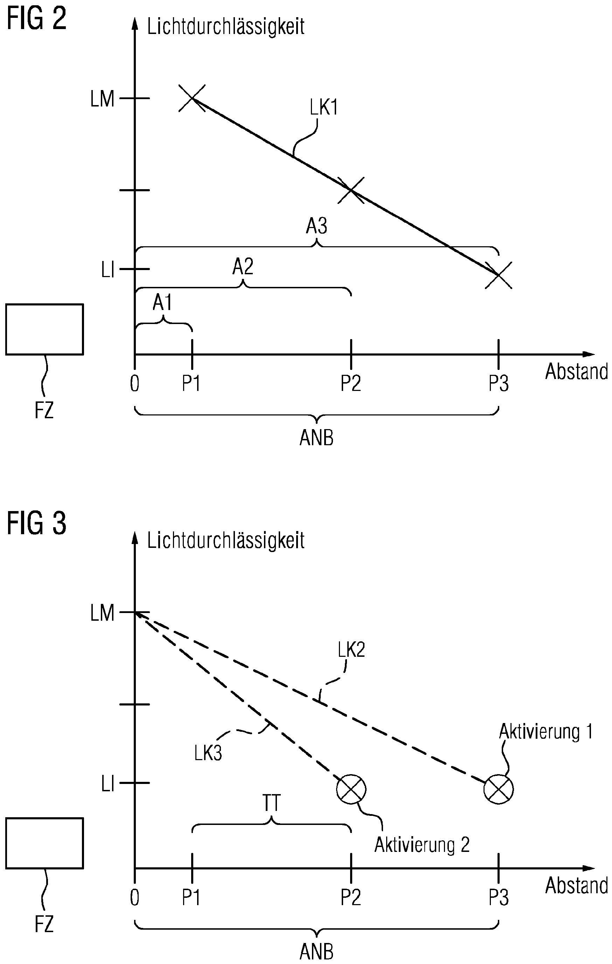

Es sei nun auf Figur 2 verwiesen, in der eine schematische Darstellung zur Einstellung der Lichtdurchlässigkeit in Abhängigkeit des Abstands des Identifikationsgebers IDG1 vom Fahrzeug F2 gemäß einer ersten Ausführungsform gezeigt ist. Wie oben bereits erläutert, ist der Zugangsabschnitt ZGA dafür eingerichtet, die Position und insbesondere auch den Abstand des Identifikationsgebers IDG1 (als ein sich außerhalb des Fahrzeugs befindliches Objekts) vom Fahrzeug F2 zu bestimmen. Diese Information der bestimmten Position bzw. des Abstands kann nun von der Ansteuereinrichtung AST verwendet werden, um die optischen Eigenschaften und vor allem die Lichtdurchlässigkeit der Scheiben S1-S4, SF und SH (aller Scheiben oder bestimmter hiervon) in Abhängigkeit des Abstands des Identifikationsgebers IDG1 vom Fahrzeug F2 einzustellen.

In dem Diagramm von Figur 2 wird davon ausgegangen, dass sich das Fahrzeug F2 an der Position O befindet. Des Weiteren sind drei beispielhafte Positionen für einen den Identifikationsgeber IDG1 dargestellt, nämlich die zum Fahrzeug nächst mögliche Position P1 in einem Abstand A1 vom Fahrzeug F2, die Position P2 in einem Abstand A2 und schließlich die Position P3 in einem Abstand A3. Dabei soll die Position P3 den Abstand repräsentieren, bis zu dem die Anfragesignale der fahrzeugseitigen Antennen reichen bzw. bis zum dem eine Positions- oder Abstandsbestimmung möglich ist. Die Position P3 markiert somit die Grenze eines Annäherungsbereichs ANB, innerhalb dem der Identifikationsgeber die Anfragesignale empfängt und innerhalb die Abstandsbestimmung möglich ist.

Es wird von der Situation ausgegangen, dass das Fahrzeug F2 abgestellt bzw. geparkt wurde, und die Scheiben S1-S4, SF und SH von der Ansteuereinrichtung AST dem in einen Zustand gebracht worden sind, bei dem sie eine geringe Lichtdurchlässigkeit, insbesondere eine minimale Lichtdurchlässigkeit LI haben, um aus Gründen des Diebstahlschutzes keinen Blick in die Fahrgastzelle FG2 zu ermöglichen. Nähert sich ein Benutzer mit dem Identifikationsgeber IDG1 dem Fahrzeug F2 und kommt an der Position P3 an, so beginnt, wie oben detailliert erläutert, ein erster Austausch von Funksignalen zwischen Fahrzeug F2 und Identifikationsgeber IDG1, bei dem auch ein Identifizierungscode vom Identifikationsgeber IDG1 zum Fahrzeug F2 übermittelt wird. Handelt es sich um einen korrekten Identifizierungscode, der die Zugehörigkeit des Identifikationsgebers IDG1 zum Fahrzeug bestätigt, was durch den Zugangsabschnitt ZGA überprüft wird, so wird die Ansteuereinrichtung AST mit der Ansteuerung einer oder mehrerer der Scheiben S1-S4, SF und SH entsprechend der Kurve LK1 beginnen. Das bedeutet, ergibt eine Positions- bzw. Abstandsbestimmung, dass sich der Identifikationsgeber IDG1 weiter dem Fahrzeug F2 nähert, z.B. über die Position P2 zu der Position P1 (wie in Figur 1 dargestellt), so wird die Ansteuereinrichtung die Scheiben S1-S4, SF und SH entsprechend ansteuern, bei sich verringerndem Abstand die Lichtdurchlässigkeit zu erhöhen, bis an der der Position P1 die maximale Lichtdurchlässigkeit LM für einen Fahrbetrieb des Fahrzeugs F2 eingestellt ist.

Es sei nun auf Figur 3 verwiesen, in der eine schematische Darstellung zur Einstellung der Lichtdurchlässigkeit in Abhängigkeit des Abstands des Identifikationsgebers IDG1 vom Fahrzeug F2 gemäß einer zweiten und dritten Ausführungsform gezeigt ist. Zur grundsätzlichen Erläuterung der Darstellung des Diagramms bzgl. X- und Y- Achse sei auf Figur 2 verwiesen.

Gemäß der zweiten Ausführungsform wird eine einfache abstandsabhängige Ansteuerung der Scheiben S1-S4, SF und SH (oder nur einzelner Scheiben davon) durchgeführt. Es wird wieder von der Situation ausgegangen, dass das Fahrzeug F2 abgestellt bzw. geparkt wurde, und die Scheiben S1-S4, SF und SH von der Ansteuereinrichtung AST dem in einen Zustand gebracht worden sind, bei dem sie eine geringe Lichtdurchlässigkeit, insbesondere eine minimale Lichtdurchlässigkeit LI haben, um aus Gründen des Diebstahlschutzes keinen Blick in die Fahrgastzelle FG2 zu ermöglichen. Neben diesem "Parkzustand" der Scheiben soll es im einfachsten Fall noch einen "Fahrbetriebszustand" der Scheiben geben, bei dem diese eine höhere Lichtdurchlässigkeit aufweisen als im Parkzustand, insbesondere eine maximale Lichtdurchlässigkeit LM.

Nähert sich ein Benutzer mit dem Identifikationsgeber IDG1 dem Fahrzeug F2 und kommt an der Position P3 an, so beginnt, wie oben detailliert erläutert, ein erster Austausch von Funksignalen zwischen Fahrzeug F2 und Identifikationsgeber IDG1, bei dem auch ein Identifizierungscode vom Identifikationsgeber IDG1 zum Fahrzeug F2 übermittelt wird. Handelt es sich um einen korrekten Identifizierungscode, der die Zugehörigkeit des Identifikationsgebers IDG1 zum Fahrzeug bestätigt, was durch den Zugangsabschnitt ZGA überprüft wird, so wird die Ansteuereinrichtung AST mit der Ansteuerung von einer oder mehreren der Scheiben S1-S4, SF und SH beginnen. Gemäß der zweiten Ausführungsform erfolgt die Ansteuerung durch die Ansteuereinrichtung AST derart, dass sie ein Ansteuersignal an die Scheiben S1-S4, SF und SH ausgibt, damit diese (bei Erreichen des Annährungsbereichs bzw. der Position P3) den "Fahrbetriebszustand" mit hoher Lichtdurchlässigkeit einnehmen. Es wird hier dem Fall Rechnung getragen, dass einzelne oder alle Scheiben nicht unmittelbar auf das Ansteuersignal reagieren, sondern eine gewissen Trägheit oder Verzögerung bei der Veränderung der Lichtdurchlässigkeit haben. Durch das frühzeitige Aktivieren (in der Zeichnung als "Aktivierung 1" bezeichnet) kann somit erreicht werden, dass die Veränderung der Lichtdurchlässigkeit schon vor Eintreffen des Identifikationsgebers IDG1 am Fahrzeug F2 begonnen wird, und mit hoher Wahrscheinlich bei Eintreffen abgeschlossen oder bald abgeschlossen ist. Die nun gestrichelte Kurve LK2 soll nur die Veränderung der Lichtdurchlässigkeit in einer oder mehreren Scheiben veranschaulichen, die mit der Zeit verzögert eintritt, wenn sich der Identifikationsgeber von der Position P3 zur Position P1 bewegen würde (nachdem das "Aktivierung 1" erfolgt ist).

In Figur 3 ist noch eine dritte Ausführungsform zur Ansteuerung der einen oder mehreren Scheiben S1-S4, SF und SH gezeigt. Hier soll die Ansteuereinrichtung AST das Zeitintervall TT berücksichtigen, das eine Scheibe (mit einem speziellen optisch aktiven Material) benötigt, um von dem "Parkzustand" in den "Fahrbetriebszustand" zu kommen. Nähert sich ein Identifikationsgeber IDG1 wieder dem Fahrzeug F2 und tritt in den Annährungsbereich ANB, so beginnt der Zugangsabschnitt ZGA wieder mit der Positionsbestimmung des Identifikationsgebers. Aufgrund mehrerer Positionsmessungen kann der Zugangsabschnitt ZGA nicht nur die Position des Identifikationsgebers IDG1 bestimmen, sondern auch dessen Bewegungsgeschwindigkeit. Somit kann der Zugangsabschnitt ZGA die voraussichtliche Ankunftszeit des Identifikationsgebers IDG1 am Fahrzeug FZ prognostizieren. Unter Kenntnis der Ankunftszeit sowie des Zeitintervalls zum (vollständigen) Verändern des Lichtdurchlässigkeitszustands einer oder mehrerer Scheiben, kann die Ansteuereinrichtung AST dann die einen oder mehreren Scheiben genau zu einer bestimmten Zeit vor Eintreffen des Identifikationsgebers IDG1 am Fahrzeug F2 aktivieren, bei der die vollständige Veränderung des Lichtdurchlässigkeitszustands der einen oder mehreren Scheiben noch (bis zum Eintreffen des Identifikationsgebers) möglich ist. Befindet sich beispielsweise in der Figur 3 der Identifikationsgeber IDG1 an der Position P2 und bewegt sich mit einer prognostizierten Geschwindigkeit in Richtung Fahrzeug FZ auf die Position P1, wobei zur Überwindung der Strecke zwischen Position P1 und P2 ein Zeitintervall TT prognostiziert wird, dann wird die Ansteuereinrichtung AST bei Erkennen des Identifikationsgebers IDG1 an der Position P2 mit dem Aktivieren der einen oder mehreren Scheiben beginnen ("Aktivierung 2"), um diese in den "Fahrbetriebszustand" zu bringen. Auf diese Weise kann der optimale Zeitpunkt zum Verändern der Lichtdurchlässigkeit für die Scheiben von der Ansteuereinrichtung AST bestimmt werden. Die nun gestrichelte Kurve LK3 soll nur die Veränderung der Lichtdurchlässigkeit in einer oder mehreren Scheiben veranschaulichen, die mit der Zeit verzögert eintritt, wenn sich der Identifikationsgeber von der Position P2 zur Position P1 bewegen würde (nachdem das "Aktivierung 2" erfolgt ist).

## Patentansprüche

1. Anordnung zum Betreiben einer oder mehrerer am Fahrzeug (FZ) angebrachter, insbesondere eine Fahrgastzelle (FGZ) begrenzende Scheiben (S1 - S4, SF, SH), deren optische Eigenschaften durch elektrische Ansteuerung veränderbar sind, wobei die Anordnung folgende Merkmale aufweist:
- eine Positionsbestimmungseinrichtung (ZGA) zum Bestimmen der Position (P1-P3) eines sich außerhalb des Fahrzeugs (FZ) befindlichen Objekts (IDG1);
- ein Steuergerät (STG, AST), das dafür eingerichtet ist, die eine oder die mehreren Scheiben (S1 - S4, SF, SH) in Abhängigkeit des Abstands (A1, A2, A3) zwischen dem Fahrzeug und dem Objekt (IDG1) anzusteuern,
**dadurch gekennzeichnet, dass** das Steuergerät ferner derart eingerichtet ist, die eine oder die mehreren Scheiben (S1 - S4, SF, SH) derart anzusteuern, dass deren Lichtdurchlässigkeit mit abnehmendem Abstand erhöht wird, und die Lichtdurchlässigkeit mit zunehmendem Abstand verringert wird.

2. Anordnung nach Anspruch 1, bei der das Steuergerät derart eingerichtet ist, die Ansteuerung der einen oder mehreren Scheiben unterhalb eines ersten vorbestimmten Abstands (A3) des Objekts (IDG1) vom Fahrzeug (FZ) zu beginnen.

3. Anordnung nach Anspruch 1, bei der das Steuergerät derart eingerichtet ist, die Ansteuerung der einen oder mehreren Scheiben (S1 - S4, SF, SH) bei einem bestimmten Abstand des Objekts (IDG1) vom Fahrzeug (FZ) kleiner einem ersten vorbestimmten Abstand (A3) und größer einem zweiten vorbestimmten Abstand (A1) durchzuführen.

4. Anordnung nach einem der Ansprüche 1 bis 3, bei der die Positionsbestimmungseinrichtung einen optischen Sensor, wie eine Kamera, zum Erfassen des sich außerhalb des Fahrzeugs befindlichen Objekts umfasst.

5. Anordnung nach Anspruch 4, die ferner eine Bildverarbeitungseinrichtung zur Identifizierung des Objekts und/oder bestimmter Eigenschaften des Objekts.

6. Anordnung nach Anspruch 5, bei dem das Steuergerät derart eingerichtet ist, die eine oder die mehreren Scheiben (S1 - S4, SF, SH) dann anzusteuern, wenn die Bildverarbeitungseinrichtung ein bestimmtes Objekt und/oder bestimmte Eigenschaften des Objekts erkannt hat.

7. Anordnung nach einem der Ansprüche 1 bis 6, bei der die Positionsbestimmungseinrichtung (ZGA) ein Funkmodul (AA3, AA2) zum Empfangen von objektseitigen Funksignalen (RF3, RF2) aufweist, die auf die Position (P1) des Objekts (IDG1) außerhalb des Fahrzeugs (FZ) hinweisen.

8. Anordnung nach Anspruch 7, bei der die Funksignale Positionsdaten (RSSI2, RSSI3) des Objekts (IDG1) enthalten.

9. Anordnung nach Anspruch 8, bei dem das Funkmodul (AA2, AA3) ferner Anfragesignale (LF2, LF3) zum Auslösen der objektseitigen Funksignale (RF2, RF3) aussendet.

10. Anordnung nach einem der Ansprüche 7 bis 9, bei der die objektseitigen Funksignale (RF2, RF3) einen Identifizierungscode umfassen.

11. Anordnung nach Anspruch 9, bei dem das Steuergerät (STG) derart eingerichtet ist, die eine oder die mehreren Scheiben (S1 - S4, SF, SH) dann anzusteuern, wenn der durch die objektseitigen Funksignale empfangene Identifizierungscode einem vorbestimmten Code entspricht.

12. Fahrzeug (FZ) mit folgenden Merkmalen:
- einer Fahrgastzelle (FGZ), die von einer oder mehreren Scheiben (S1 - S4, SF, SH) begrenzt wird,
- einer Anordnung nach einem der Ansprüche 1 bis 11 zum Betreiben der einen oder mehreren Scheiben (S1 - S4, SF, SH) .

13. Verfahren zum Betreiben einer oder mehrerer am Fahrzeug (FZ) angebrachter, insbesondere eine Fahrgastzelle (FGZ) begrenzende Scheiben (S1 - S4, SF, SH), deren optische Eigenschaften durch elektrische Ansteuerung veränderbar ist, wobei das Verfahren folgende Schritte aufweist:
- Bestimmen der Position (P1-P3) eines sich außerhalb des Fahrzeugs (FZ) befindlichen Objekts (IDG1);
- Ansteuern der einen oder mehreren Scheiben (S1 - S4, SF, SH) in Abhängigkeit des Abstands (A1, A2, A3) zwischen dem Fahrzeug und dem Objekt (IDG1), **dadurch gekennzeichnet, dass**
die Ansteuerung der einen oder mehreren Scheiben (S1 - S4, SF, SH) derart erfolgt, dass deren Lichtdurchlässigkeit mit abnehmendem Abstand erhöht wird, und deren Lichtdurchlässigkeit mit zunehmendem Abstand verringert wird.

## Claims

1. Arrangement for operating one or more windows (S1 - S4, SF, SH), which are installed in a vehicle (FZ) and in particular delimit a passenger compartment (FGZ) and whose optical properties can be changed by electrical actuation, wherein the arrangement has the following features:
- a position-determining device (ZGA) for determining the position (P1-P3) of an object (IDG1) which is located outside the vehicle (FZ);
- a control device (STG, AST) which is configured to actuate the one or more windows (S1 - S4, SF, SH) as a function of the distance (A1, A2, A3) between the vehicle and the object (IDG1),
**characterized in that** the control device is also configured to actuate the one or more windows (S1 - S4, SF, SH) in such way that their translucency is increased with decreasing distance and the translucency is reduced with increasing distance.

2. Arrangement according to Claim 1, in which the control device is configured to start the actuation of the one or more windows below a first predetermined distance (A3) of the object (IDG1) from the vehicle (FZ).

3. Arrangement according to Claim 1, in which the control device is configured to carry out the actuation of the one or more windows (S1 - S4, SF, SH) at a specific distance of the object (IDG1) from the vehicle (FZ) which is less than a first predetermined distance (A3) and greater than a second predetermined distance (A1).

4. Arrangement according to one of Claims 1 to 3, in which the position-determining device comprises an optical sensor, such as a camera, for capturing the object which is located outside the vehicle.

5. Arrangement according to Claim 4, which also comprises an image-processing device for identifying the object and/or specific properties of the object.

6. Arrangement according to Claim 5, in which the control device is configured to actuate the one or more windows (S1 - S4, SF, SH) when the image-processing device has detected a specific object and/or specific properties of the object.

7. Arrangement according to one of Claims 1 to 6, in which the position-determining device (ZGA) has a radio module (AA3, AA2) for receiving object-side radio signals (RF3, RF2) which indicate the position (P1) of the object (IDG1) outside the vehicle (FZ).

8. Arrangement according to Claim 7, in which the radio signals contain position data (RSSI2, RSSI3) of the object (IDG1).

9. Arrangement according to Claim 8, in which the radio module (AA2, AA3) also emits interrogation signals (LF2, LF3) for triggering the object-side radio signals (RF2, RF3).

10. Arrangement according to one of Claims 7 to 9, in which the object-side radio signals (RF2, RF3) comprise an identification code.

11. Arrangement according to Claim 9, in which the control device (STG) is configured to actuate the one or more windows (S1 - S4, SF, SH) when the identification code received by means of the object-side radio signals corresponds to a predetermined code.

12. Vehicle (FZ) having the following features:
- a passenger compartment (FGZ) which is delimited by one or more windows (S1 - S4, SF, SH),
- an arrangement according to one of Claims 1 to 11 for operating the one or more windows (S1 - S4, SF, SH).

13. Method for operating one or more windows (S1 - S4, SF, SH), which are installed in a vehicle (FZ) and in particular delimit a passenger compartment (FGZ) and whose optical properties can be changed by electrical actuation, wherein the method has the following steps:
- determining the position (P1-P3) of an object (IDG1) which is located outside the vehicle (FZ);
- actuating the one or more windows (S1 - S4, SF, SH) as a function of the distance (A1, A2, A3) between the vehicle and the object (IDG1), **characterized in that**
the one or more windows (S1 - S4, SF, SH) are actuated in such way that their translucency is increased with decreasing distance and their translucency is reduced with increasing distance.

## Revendications

1. Arrangement pour faire fonctionner une ou plusieurs vitres (S1 - S4, SF, SH) montées sur un véhicule (FZ), en particulier délimitant un compartiment passagers (FGZ), dont les propriétés optiques peuvent être modifiées par commande électrique, l'arrangement possédant les caractéristiques suivantes :
- un dispositif de détermination de position (ZGA) destiné à déterminer la position (P1-P3) d'un objet (IDG1) qui se trouve à l'extérieur du véhicule (FZ) ;
- un contrôleur (STG, AST), qui est conçu pour commander l'une ou les plusieurs vitres (S1 - S4, SF, SH) en fonction de l'écart (A1, A2, A3) entre le véhicule et l'objet (IDG1),
**caractérisé en ce que** le contrôleur est en outre conçu pour commander l'une ou les plusieurs vitres (S1 - S4, SF, SH) de telle sorte que leur transparence à la lumière augmente à mesure que l'écart diminue et la transparence à la lumière est réduite à mesure que l'écart augmente.

2. Arrangement selon la revendication 1, avec lequel le contrôleur est conçu de manière à commencer la commande de l'une ou des plusieurs vitres au-dessous d'un premier écart (A3) prédéterminé entre l'objet (IDG1) et le véhicule (FZ).

3. Arrangement selon la revendication 1, avec lequel le contrôleur est conçu de manière à effectuer la commande de l'une ou des plusieurs vitres (S1 - S4, SF, SH) lors d'un écart déterminé entre l'objet (IDG1) et le véhicule (FZ), inférieur au premier écart (A3) prédéterminé et supérieur à un deuxième écart (A1) prédéterminé.

4. Arrangement selon l'une des revendications 1 à 3, avec lequel le dispositif de détermination de position comporte un capteur optique, tel qu'une caméra, destiné à détecter l'objet qui se trouve à l'extérieur du véhicule.

5. Arrangement selon la revendication 4, lequel en outre comporte un dispositif de traitement d'images destiné à l'identification de l'objet et/ou de certaines propriétés de l'objet.

6. Arrangement selon la revendication 5, avec lequel le contrôleur est conçu de manière à commander l'une ou les plusieurs vitres (S1 - S4, SF, SH) lorsque le dispositif de traitement d'images a reconnu un certain objet et/ou certaines propriétés de l'objet.

7. Arrangement selon l'une des revendications 1 à 6, avec lequel le dispositif de détermination de position (ZGA) possède un module radioélectrique (AA3, AA2) destiné à recevoir des signaux radioélectriques (RF3, RF2) du côté de l'objet, lesquels signalent la position (P1) de l'objet (IDG1) à l'extérieur du véhicule (FZ).

8. Arrangement selon la revendication 7, avec lequel les signaux radioélectriques contiennent des données de position (RSSI2, RSSI3) de l'objet (IDG1).

9. Arrangement selon la revendication 8, avec lequel le module radioélectrique (AA2, AA3) émet en plus des signaux d'interrogation (LF2, LF3) pour déclencher les signaux radioélectriques (RF2, RF3) du côté de l'objet.

10. Arrangement selon l'une des revendications 7 à 9, avec lequel les signaux radioélectriques (RF2, RF3) du côté de l'objet comprennent un code d'identification.

11. Arrangement selon la revendication 9, avec lequel le contrôleur (STG) est conçu de manière à commander l'une ou les plusieurs vitres (S1 - S4, SF, SH) lorsque le code d'identification reçu par les signaux radioélectriques du côté de l'objet correspond à un code prédéterminé.

12. Véhicule (FZ) ayant les caractéristiques suivantes :
- un compartiment passagers (FGZ) qui est délimité par une ou plusieurs vitres (S1 - S4, SF, SH),
- un arrangement selon l'une des revendications 1 à 11 pour faire fonctionner l'une ou les plusieurs vitres (S1 - S4, SF, SH).

13. Procédé pour faire fonctionner une ou plusieurs vitres (S1 - S4, SF, SH) montées sur un véhicule (FZ), en particulier délimitant un compartiment passagers (FGZ), dont les propriétés optiques peuvent être modifiées par commande électrique, le procédé comprenant les étapes suivantes :
- détermination de la position (P1-P3) d'un objet (IDG1) qui se trouve à l'extérieur du véhicule (FZ) ;
- commande de l'une ou des plusieurs vitres (S1 - S4, SF, SH) en fonction de l'écart (A1, A2, A3) entre le véhicule et l'objet (IDG1),
**caractérisé en ce que** la commande de l'une ou des plusieurs vitres (S1 - S4, SF, SH) s'effectue de telle sorte que leur transparence à la lumière augmente à mesure que l'écart diminue et leur transparence à la lumière est réduite à mesure que l'écart augmente.
